# EUROPEAN PATENT APPLICATION

(11) **EP 2 860 697 A1**
(43) Date of publication of application: **15.04.2015**
(21) Application number: 13306394.1
(22) Date of filing: 09.10.2013
(51) Int. Cl.: G06T 11/00

(54) **Method for displaying a content through a head mounted display device, corresponding electronic device and computer program product**

(71) Applicant: Thomson Licensing, 92130 Issy-les-Moulineaux (FR)
(72) Inventor: Blonde, Laurent, 35576 Cesson-Sévigné (FR); Huber, Mark, Burbank, CA 91504 (US); Redmann, William, Burbank, CA 91504 (US)
(74) Representative: Perrot, Sébastien

(57) **Abstract**

In one embodiment, it is proposed a method for displaying a content through a head mounted display device (100). Such method is remarkable in that it comprises:
- a step of adapting a content to be displayed through said head mounted display device in function of at least an information related to at least one surface (102,103,104);
- a step of displaying an adapted content, defining at least one display surface, said at least one display surface and a part of said at least one surface being overlapped.

## Description

### Field of the invention

The invention relates to the display of content (such as an image, a frame, a virtual control interface, a sequence of frames, etc.) through head mounted display devices. More precisely, the invention is to be used in the context where a person uses a wearable computer with a head-mounted display (also named a head mounted display device), such as for example see trough glasses, and wants to see content (such as a video, and so on).

### Background of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Head mounted display devices such as see through glasses (google glasses, etc. see for example the document US 20100079356**)** and other display devices of that kind are becoming more and more used by people due to the fact that they enable the user to see content (via a projection onto the retina) without having to use the hands as when they use mobile phone or tablet. But the use of head mounted display devices has some drawbacks. A first issue is linked to the fact that it is not always possible to see distinctly the projected content in a bright context (especially outside, with a shining sun). Some attempts have been proposed to overcome this issue by adapting (increasing) the brightness of the displayed content as disclosed in the document US 2011279355**.** But increasing the light power of the virtual projection, in competition with the brightness of the real scene, also increases the risk of an uncomfortable configuration. A second issue is linked to the fact that when several users wear such head mounted display devices, they cannot show each other some elements in a same displayed content as they could do when they are using a mobile device.

The invention aims to solve the mentioned issues with less complex elements.

### Summary of the invention

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present invention is directed to a method for displaying a content through a head mounted display device. Such method is remarkable in that it comprises:
- a step of adapting a content to be displayed through an head mounted display device in function of at least an information related to at least one surface;
- a step of displaying an adapted content, defining at least one display surface, said at least one display surface and a part of said at least one surface being overlapped.

In one embodiment, the step of adapting delivers such adapted content, and the head mounted display device is used by a user. Hence, the step of displaying an adapted content, defines said at least one display surface for said user, said at least one display surface and a part of said at least one surface being overlapped for said user.

In one embodiment, the adapted content is displayed into at least one retina of a user through said head mounted display device. In a preferred embodiment, such method for displaying is remarkable in that said surface corresponds to a screen of an electronic device.

In a preferred embodiment, such method for displaying is remarkable in that said surface is dark.

One purpose of the invention is to enhance the quality of the vision of a content displayed by a head mounted device. According to one embodiment of the invention, the head mounted device comprises a sensor that can detect for instance the geometry of a particular surface (for example a dark surface). Then a projector unit can adapt the content to be displayed in function of the geometry (or configuration) of such particular surface (and also in function of the nature of the color of the surface). Such projector unit delivers in at least one retina of the user some content that appears to match the particular surface. Hence, the user has the impression that the content is displayed onto the particular surface. Due to the darkness of the surface, the adaptation of the brightness of the displayed content is easier than in previous known technique from state-of-the-art.

In a preferred embodiment, such method for displaying is remarkable in that said dark surface comprises a nanomaterial.

In a preferred embodiment, such method for displaying is remarkable in that said dark surface comprises a light trapping structure.

In a preferred embodiment, such method for displaying is remarkable in that said surface is a reflective polarizer and in that said surface appears dark when being seen through at least one glass of said head mounted display device.

In a preferred embodiment, such method for displaying is remarkable in that said information also comprises data related to a location of said at least one surface.

In a preferred embodiment, such method for displaying is remarkable in that said step of adapting a content uses at least an information related to a position of the head mounted display device.

In a preferred embodiment, such method for displaying is remarkable in that said information comprises data associated to at least a geometry of said at least one surface.

In a preferred embodiment, such method for displaying is remarkable in that said geometry of said at least one surface has a shape corresponding to an element which belongs to a group comprising : a circle, a triangle, a rectangle , a square.

In a preferred embodiment, such method for displaying is remarkable in that it further comprises a step of detecting said at least one surface.

In a preferred embodiment, such method for displaying is remarkable in that said step of adapting further uses an information related to an area of interest pointed out by a person.

In a preferred embodiment, such method for displaying is remarkable in that said at least one display surface and a totality of said at least one surface are being overlapped. Hence, for said user, said at least one display surface and a totality of said at least one surface seem to be overlapped.

In another embodiment of the invention, one or several (dark) surfaces are detected by the head mounted display device, and the projector unit displays on one or several display areas (within a glass of the head mounted display device) that are mapped to the detected dark surfaces, one or several different contents.

In another embodiment of the invention, such method for displaying is remarkable in that it comprises a step of obtaining said information related to said at least one surface.

According to an exemplary implementation, the different steps of the method are implemented by a computer software program or programs, this software program comprising software instructions designed to be executed by a data processor of an electronic device (or module or computer) according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more subprograms of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

In another embodiment, it is proposed an head mounted display device that can display a content. Such head mounted display device is remarkable in that it comprises:
- means for adapting a content to be displayed in function of at least an information related to at least one surface;
- means for displaying an adapted content, defining at least one display, said at least one display surface and a part of said at least one surface being overlapped.

In another embodiment, it is proposed a dedicated surface with some particular features (as depicted in the present document) that can be detected and use by an head mounted display device in order to enhance the display of content through head mounted display device.

### Brief description of the figures

The above and other aspects of the invention will become more apparent by the following detailed description of exemplary embodiments thereof with reference to the attached drawings in which:
- Figure 1(a) presents a head mounted device according to one embodiment of the invention;
- Figure 1(b) presents a head mounted device according to one embodiment of the invention;
- Figure 2 discloses a flow chart for displaying a content through a head mounted display device according to one embodiment of the invention;
- Figure 3 presents a context of use of a head mounted display device according to one embodiment of the invention;
- Figure 4(a) presents two images that are displayed through a head mounted device according to one embodiment of the invention;
- Figure 4(b) presents details on how to include additional information in a displayed content through the head mounted device, according to one embodiment of the invention;
- Figure 5 presents another context of use of a head mounted display device according to one embodiment of the invention;
- Figure 6(a) presents two target devices with dedicated surfaces according to one embodiment of the invention;
- Figure 6(b) presents the two target devices described in the Figure 6(a), with one overlapping the dedicated surface of the other;
- Figure 7 presents an electronic device that can be used to perform one or several steps of the methods disclosed in the present document.

### Detailed description

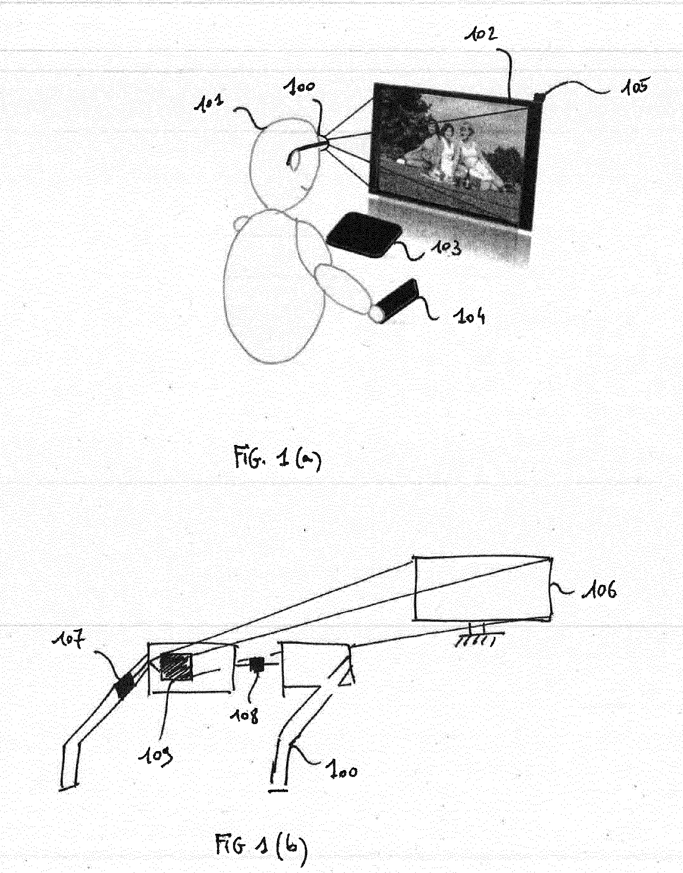

Figure 1(a) presents a head mounted device according to one embodiment of the invention.

A user referenced 101, using a head mounted device, referenced 100, according to one embodiment of the invention, is able to visualize a content through the head mounted device 100 as if the displayed content was projected on one part of a target device, referenced 102, 103 and 104. These target devices can be either a TV screen 102, or a tablet screen 103, or a mobile phone screen 104, that are switched off, or that cannot display something. In another embodiment, such target device can be an outside billboard or a cinema screen. In another embodiment, such target device is a sheet of paper. Whatever a target device is, it must have a dedicated surface (also named a dark surface in some embodiments, for which constitutive features are described in the present document) that is used in order to give the user 101 the impression that the displayed content through the head mounted display device 101 is displayed on such dedicated surface. The head mounted device 100 also comprises a module that enables to compensate the head movements of a user 101, and to keep aligned and "superimposed" the displayed content to the dedicated surface. The head mounted display device also comprises a module that enables to process images or video content (in order to perform adequate scale, keystoning, rotation, etc.).

In one embodiment of the invention, the dedicated surface is a black or dark surface (when it is observed under natural light). The use of a target device 102 or 103 with such black or dark surface provides a better visual quality of the displayed content through the head mounted device 100. Indeed, in one embodiment, it should be noticed that the blackness of the specific surfaces is an important factor to enhance contrast of the virtual image for the head mounted display device without using too much energy. The surface blackness may depend on the surface material, mattness or structure or on the position relative to lights in a room. It should be remarked that good results can be obtained with light trapping structures as for example the ones used in solar cells (structured, regular or irregular light traps). It should be noted that several options are proposed to create black surface for augmented reality. For example, in one embodiment, nanomaterials or nanostructures can be comprised in such black or dark surface. In another embodiment, a black or dark surface can be made of grapheme that makes a conductive ink intended for printed electronics, but it can also be very black, especially when silk-screen printed (which makes for a very spike-y surface). In another embodiment, the black or dark surface comprises solar cells. More precisely, in one embodiment, such black surface is a combination of graphene and molybdenite, enabling to obtain solar cells with a good power conversion. Hence, in that case, the blak or dark surface enables to capture and distribute energy. In one embodiment, as the dark surface does not consume energy (as such surface does not display something, no energy is consumed), the target device can also comprise some plug-in that can be used to power some devices with the captured energy. Hence, via the use of such black or dark surface, the target device can be viewed as a power energy tank as well as a mean to improve the display obtained through the head mounted device 100.

In one embodiment of the invention, the dedicated surface comprises a reflective polarizer film and the head mounted device 100 comprises one or two polarizers on the glasses. Such polarizer is oriented in such way that it blocks light transmission. Therefore, the dedicated surface appears as being black when the user looks through the glasses at the dedicated surface. Hence, such dedicated surface does not appear to be dark for a user when he does not wear such head mounted display device 100, and under normal light conditions. In one embodiment of the invention, data related to the polarization characteristics of the dedicated surface can be transmitted to the head mounted display device 100 either by the target device itself, or by a kind of beacon positioned in the area of the target device. In another embodiment of the invention, a handshake between the target device and the head mounted display device 100 is performed in order to exchange data related to the polarization configuration to be used. In one embodiment of the invention, the reflective polarizer film is a linear reflective polarizer film. In another embodiment, the dedicated surface comprises a circular polarized reflective polarizer (which is angle insensible).

In one embodiment, close to one target device, a dedicated device, referenced 105, enables the head mounted device 100 to accurately determines the dimension (as well as the shape) of the black surface.

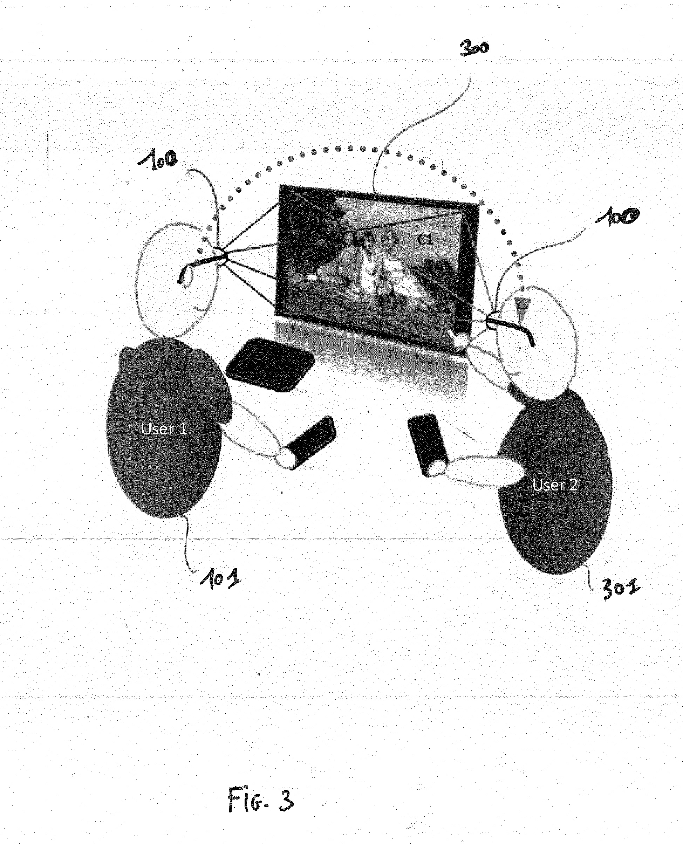

Moreover, by this way of displaying a content, the present technique provides a way to ease the interaction of a viewer with a displayed content (as for example a virtual scene in a movie that is displayed through the head mounted display device), as it is depicted in the figures 3 to 5.

Another advantage of the use of such embodiment of the invention is that a dedicated surface (either a black or dark surface, or a polarized surface) associated with head mounted device 100 provides confidentiality to watching (or browsing) of displayed content. Indeed, no one except the user 101 can see what is projected through the head mounted display device.

Figure 1(b) presents a head mounted device according to one embodiment of the invention.

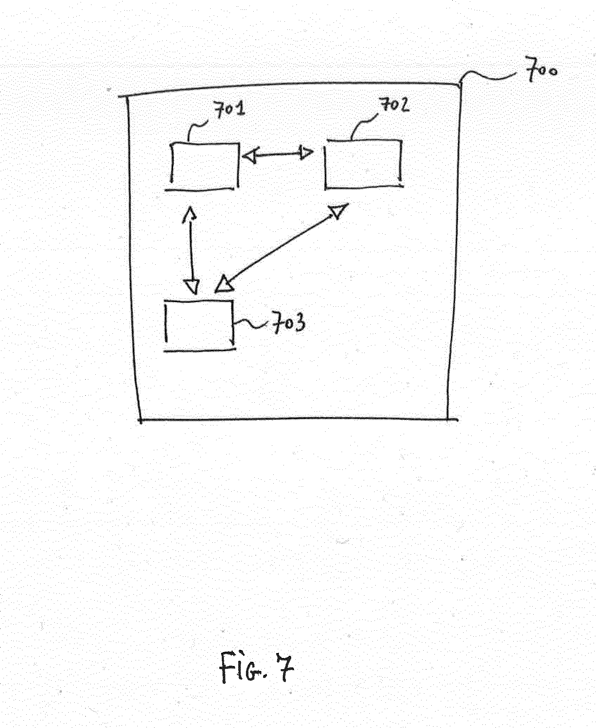

More precisely, in such embodiment, a head mounted device, referenced 100, comprises two glasses, and an electronic device, referenced 107, (an example of such device is detailed in the figure 7), that can generate or handle a signal to be displayed to a user, a sensor referenced 108 that can detect a target device, referenced 106, by detecting for example a QR code (i.e. a quick response code), that can be comprised on or around the target device 106 (as for example the dedicated device 105). In one embodiment, the displayed signal is directly projected in the retina of the user in such a way that the displayed content 109 appears to be projected on to the surface of the target device 106.

When the user moves his head in the direction of the target device 106, the sensor 108 detects the presence of a target device that can be used to be a kind of support for the content displayed through the head mounted device.

In one embodiment, the head mounted device is able to recover information related to the surface of the target device 106 (such as the dimension, the shape, etc.), as well as information of the position of the target device compared to the head mounted device 100. Indeed, in one embodiment of the invention, the target device 106 can transmit a unique reference index via visible or non-visible (such as an infrared signal) camera readable information (e.g. using AR-Tag or barcode or a QR code...) or using a RF (radiofrequency) identification mean. In another embodiment, such reference index can be used in conjunction with GPS data or other location services information (e.g., based on which Wi-Fi stations or cell phone towers are accessible in this location) so as to identify the dedicated surface unambiguously. In another embodiment, some geometric information related to the dedicated surface of the target device 106 can be accessed by a reference to a database, accessed via the unique reference index associated with the surface itself. In one embodiment, such geometric information can include the definition of a geometrical reference system and a reference point on the surface, in absolute coordinates, or alternatively a relative coordinates system with regard to an eyewear (or a camera) if the absolute location of the eyewear is known, or alternatively relative size and pose information obtained from an acquired AR-Tag (for Augmented Reality-Tag). In another embodiment, such geometric information further comprises information related to the surface shape, size, pose and border position with regard to the reference point.

In one embodiment, the head mounted display device comprises means that enable to obtain these information.

When such target device 106 is detected, the head mounted device can display a proposal to use such detected target device as a kind of support of image (i.e. it not a real/physical support due to the fact that the displayed content 109 is not projected towards the target device 106, but is projected onto a retina of the user in such way that the user has the impression that the displayed content is projected onto the target device 106.

In one embodiment, as mentioned previously, the material of the target device 106 is dark, enabling to enhance the contrast of the displayed content.

In another embodiment, as mentioned previously, the invention is based on the use of polarized light features. In such embodiment, a combination of a reflective polarizer as a dedicated surface, and a polarizer on the glasses can be envisioned. More precisely, the two polarizers are oriented to block light transmission such that the reflective polarizer screen surface appears black when the user looks through the glasses at the screen surface reflective polarizer. This would always place the presented content against a uniform black background, if the user was looking at the reflective polarized dedicated surface. Let 's remark that such system needs ambient light falling onto the reflective polarizer in order for this effect to work, but in a totally black ambience the effect would be useless as contrast would be maximal anyway.

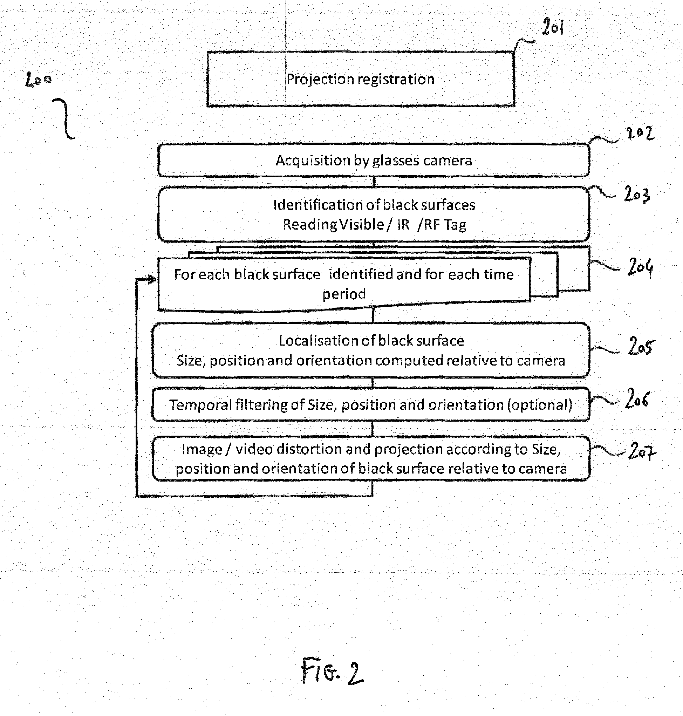

Figure 2 discloses a flow chart for displaying a content through a head mounted display device according to one embodiment of the invention.

Before being able to use a black surface on a target device, in one embodiment, a projection registration step, referenced 201, should be executed. Without such registration step, anyone could use the black surface of a target device. However, in the case that such black surface is positioned in a public area (such as in a train station, or an airport), via a panel for example, only the users that have subscribed to a service can use such black surface as a way to enhance the quality of the projection through the head mounted devices. In one embodiment, a kind of authentication can be used in order to let a user, via a head mounted device, use such black surface as proposed in the present document.

Then, in the case that a user is able to access such service (or if the target device provides a black surface without access control (e.g. a kind of free of charge use)), a sensor (as for example the sensor 108) is activated, in a step referenced 202, and starts to identify the black surface, in a step referenced 203, through data obtained by processing data delivered for example from a RF module comprised in the target device or in the neighborhood of such target device (in other embodiments, other means that can deliver such data can be used). Then, a real time display processing technique is performed through the steps 204 to 207 that takes (in real time) into account information related to the black surface (such as the shape, the location, etc.), as well as the location of the user (and more precisely the location of the head mounted display device that is used). These information are then combined within the head mounted display device with images or frames that have to be displayed via such head mounted display device. For example, parameters such as luminance, and so on are modified by taking into account dedicated surface parameters as well as external data (such as the brightness in the place where the target device is positioned) that can be obtained either from a sensor comprised in the head mounted device or via a sensor comprised in the target device itself, in such way that the displayed content through the head mounted device provides to the user a ease of view and a better experience than without the use of a dedicated surface as a support in order to enhance the watching of content.

Figure 3 presents a context of use of head mounted according to one embodiment of the invention.

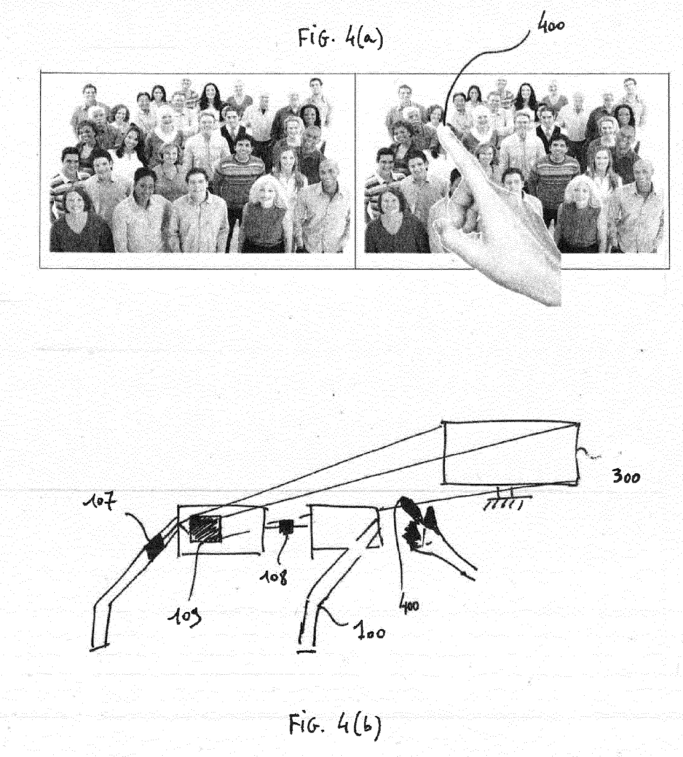

More precisely, by using such head mounted device 100, it is possible that at least two users (one referenced 101, the other 301) look at a same target device, referenced 300, that has a black surface as mentioned previously. In such embodiment, a same content is displayed through the head mounted device of each user 101 and 301, as if such content was displayed to the black surface. Obviously, an external user (e.g. different from users 101 and 301) could not perceive that the target device is used in interaction with the head mounted device, nor detect what is displayed through the head mounted device 100. The users 101 and 301 can interact together by showing each other elements that appear in the displayed content through the head mounted device. This is detailed in the description of Figures 4(a) and 4(b).

Indeed, Figure 4(a) presents two images that are displayed through a head mounted device according to one embodiment of the invention. More precisely, the left image view represents a large group of people without information. Such image is for example viewed by the user 101 in the context of the Figure 3. The right image presents the same group image with an additional information that is displayed through the head mounted display. In such embodiment, the additional information is a hand, referenced 400, displayed through the head mounted device 100 of the user 101, that represents the hand of the user 301 that wants to point out a person in such group of people.

Figure 4(b) presents details on how to include additional information in a displayed content through the head mounted device, according to one embodiment of the invention. More precisely, the Figure 4(b) explains how to generate the additional information 400 and to transmit such information in order to obtain as a result for the user 101 the right image of the Figure 4(a).

In such embodiment of the invention, the sensor 108 comprised in the head mounted display device 100 that is used by the user 301 detects the hand 400 of the user that is positioned between the head mounted device and the target device 300. The head mounted display device then determines in function of the position of the detected hand, an element in the content displayed through the head mounted display device 100 that have to be highlighted in the same content displayed via the head mounted display device 100 that is used by the user 101. Then, such information is transmitted by emitting means of the head mounted display device either directly to the other head mounted display device, or indirectly via the target device 300. In one embodiment, the whole hand of the user 301 is displayed via the head mounted display device 100. In another embodiment, only a point (or a circle, or whatever geometric shape indicator) is displayed in order to highlight an element in the displayed content. Hence, such technique enables a better interaction between the users 101 and 301, when they are watching a same content in a same place, via the head mounted display devices 100, in connection with a black surface of a target device 300.

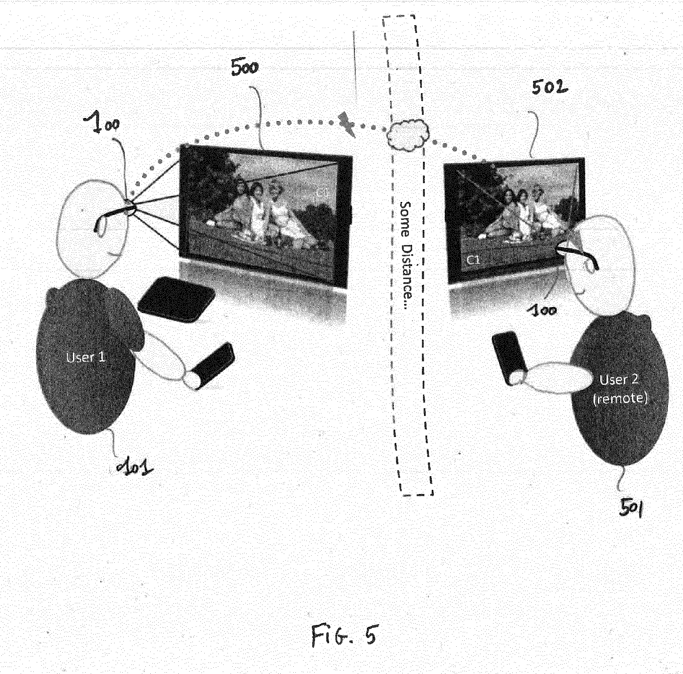

Figure 5 presents another context of use of a head mounted display device according to one embodiment of the invention.

More precisely, in such embodiment, at least two users (one referenced 101 and the other referenced 501) can share additional information as the one depicted in relation with the description of the Figures 4(a) and 4(b), but in a context where the users are not in the same place (but are watching a same content through the use of head mounted display device 100).

Moreover, in such "distant" context, the users don't have access to a same target device (e.g. the black surface from the target device referenced 500, associated to the user 101, is slightly different from the target device referenced 502, associated to the user 501). However, one skilled in the art can adapt the processing induced by such differences in the target devices (such as a content scaling processing or repurposing may be necessary depending on the in black surfaces characteristics of the target devices 500 and 502).

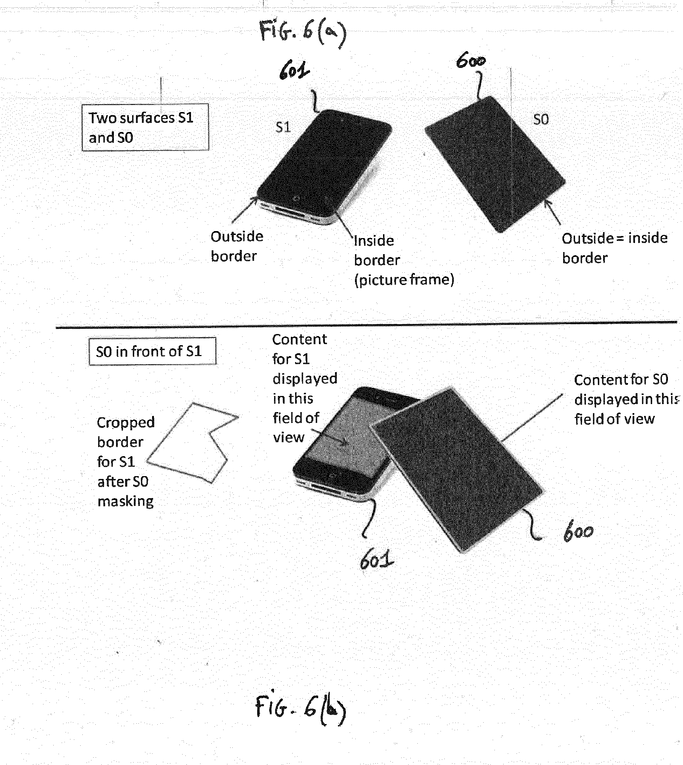

Figure 6(a) presents two target devices with dedicated surfaces according to one embodiment of the invention.

The target device, referenced 600, is a tablet comprising a dedicated surface as explained previously that completely recover the surface S0 of the tablet. Hence, when using a head mounted display device 100, the displayed content appears to fit such surface referenced S0. The target device, referenced 601, is a mobile phone comprising a dedicated surface referenced S1 as explained previously that does not completely recover the surface of the mobile phone. Hence, when using a head mounted display device 100, the displayed content appears to fit such surface referenced S1.

Figure 6(b) presents the two target devices described in the Figure 6(a), with one overlapping the dedicated surface of the other.

Indeed, in the context when a user wears the head mounted display device according to one embodiment of the invention, and that the target device 600 partially overlaps the target device 601, and that the displayed content appears only to fit the surface S1, the head mounted display device is able to adapt the displayed content in such way that the overlapping appears to occur for the user.

Figure 7 presents an electronic device that can be used to perform one or several steps of the methods disclosed in the present document.

Such device referenced 700 comprises a computing unit (for example a CPU, for "*Central Processing Unit*"), referenced 701, and one or several memory units (for example a RAM (for "*Random Access Memory*") block in which intermediate results can be stored temporarily during the execution of instructions of a computer program, or a ROM ("*Read Only Memory*") block in which, among other things, computer programs are stored, or an EEPROM ("*Electrically-Erasable Programmable Read-Only Memory*") block, or a flash block referenced 702. Computer programs are made of instructions that can be executed by the computing unit. Such device 700 can also comprise a dedicated unit, referenced 703, constituting an input-output interface to allow the device 700 to communicate with other devices. In particular, this dedicated unit 703 can be connected with an antenna (in order to perform communication without contacts), or with serial ports (to carry communications with contacts). Let's remark that the arrows in Figure 7 mean that the linked units can exchange data through buses for example together.

In an alternative embodiment, some or all of the steps of the method previously described, can be implemented in hardware in a programmable FPGA ("*Field Programmable Gate Array*") component or ASIC ("*Application-Specific Integrated Circuit*") component.

In an alternative embodiment, some or all of the steps of the method previously described, can be executed on an electronic device comprising memory units and processing units as the one disclosed in the Figure 7.

## Claims

1. Method for displaying a content through a head mounted display device, **characterized in that** it comprises:
- a step of adapting a content to be displayed through said head mounted display device in function of at least an information related to at least one surface;
- a step of displaying an adapted content, defining at least one display surface, said at least one display surface and a part of said at least one surface being overlapped.

2. Method for displaying according to claim 1 **characterized in that** said surface corresponds to a screen of an electronic device.

3. Method for displaying according to any claims 1 or 2 **characterized in that** said surface is dark.

4. Method for displaying according to claim 3 **characterized in that** said dark surface comprises a nanomaterial.

5. Method for displaying according to any claims 3 to 4 **characterized in that** said dark surface comprises a light trapping structure.

6. Method for displaying according to any claims 1 to 2 **characterized in that** said surface is a reflective polarizer and **in that** said surface appears dark when being seen through at least one glass of said head mounted display device.

7. Method for displaying according to any claims 1 to 6, **characterized in that** said information also comprises data related to a location of said at least one surface.

8. Method for displaying according to any claims 1 to 7, **characterized in that** said step of adapting a content uses at least an information related to a position of the head mounted display device.

9. Method for displaying according to any claims 1 to 8 **characterized in that** said information comprises data associated to at least a geometry of said at least one surface.

10. Method for displaying according to claim 9 **characterized in that** said geometry of said at least one surface has a shape corresponding to an element which belongs to a group comprising : a circle, a triangle, a rectangle , a square.

11. Method for displaying according to any claims 1 to 10, **characterized in that** it further comprises a step of detecting said at least one surface.

12. Method for displaying according to any claims 1 to 11, **characterized in that** said step of adapting further uses an information related to an area of interest pointed out by a person.

13. Method for displaying according to any claims 1 to 12, **characterized in that** said at least one display surface and a totality of said at least one surface are being overlapped.

14. Method for displaying according to any claims 1 to 13, **characterized in that** it comprises a step of obtaining said information related to said at least one surface.

15. A computer-readable and non-transient storage medium storing a computer program comprising a set of computer-executable instructions to implement a method for displaying a content when the instructions are executed by a computer, wherein the instructions comprise instructions, which when executed, configure the computer to perform a method for displaying of claims 1 to 14.
